# EUROPEAN PATENT APPLICATION

(11) **EP 1 850 246 A1**
(43) Date of publication of application: **31.10.2007**
(21) Application number: 06713909.7
(22) Date of filing: 16.02.2006
(51) Int. Cl.: G06F 17/30

(54) **DATA RETRIEVAL SYSTEM, METHOD AND PROGRAM**

(30) Priority: 18.02.2005 JP 2005043206
(71) Applicant: Sompo Japan Insurance Inc., Tokyo 160-8338 (JP)
(72) Inventor: NAKAMURA, Takashi, ku 1-chome, Shinjuku-ku, Tokyo 1608338 (JP)
(74) Representative: Beresford, Keith Denis Lewis
(86) International application number: PCT/JP2006/302768
(87) International publication number: WO 2006/088106

(57) **Abstract**

The present invention provides a data search system having Means of Free Search (9) including Means for Selecting Higher Search Item (9A) for selecting a higher search item for type items, and lower search condition means (9B) for selecting a lower search condition on the basis of the selected higher search item. The data search system increases the degree of freedom for search, and facilitates the search even in the case of a number of massive data items, so that it can make the hit more reliable.

## Description

### TECHNICAL FIELD

The present invention relates to a data search system, method and program in a computer system.

### BACKGROUND ART

Conventionally, any word is inputted or a plurality of words are connected with AND/OR and inputted in the data search system used through Internet. The data search system retrieves the input word as being a keyword and extracts the data including the same word. Meanwhile, necessary field is predetermined in common databases. These databases are restricted to the combinations of the predetermined field, and thus have no flexibility in searching the data. Consequently, a record composed of a "basic field" including input items and contents of the predetermined basic information, and a "text data" optionally describing item names and contents in pairs, is stored in the database (See Patent Document 1, for example). The data search system obtains search results by extracting a record matched to the data search condition from the "basic field" or the "text data" based on a data search command. Database search with high flexibility can be realized by selecting an appropriate data search condition from the "basic field" and the "text data".

However, the conventional data search system of ten fails to extract (does not hit) the data including the inputted keyword, and many unrelated data are often mixed even if the data is extracted (hit). In the system of the invention of Patent Document 1, data unrelated to the search result is mixed and data may not be extracted, even if the degree of freedom for search is increased. Moreover, if the data to be searched is not stored in the search object database, then wasteful trial and error is constrained and the search becomes inefficient.

The object of the present invention is to provide a data search system , method, and program, wherein the degree of freedom for search is increased, and the search is facilitated with the extraction of data made more reliable even in the case of a number of massive data items.

Patent Document 1: Japanese Patent Application Laying-Open No. 2004-287268

### DISCLOSURE OF THE INVENTION

In order to solve the above problem, first embodiment of the present invention provides a data search system for retrieving the data stored in the database, including means for selecting higher search item for allowing the selection of the higher search items, and means for selecting lower search condition for allowing the selection of the lower search condition for the respective selected higher search items.

A second embodiment further includes means for extracting real data search candidate for extracting the lower search condition from the data stored in the database.

A third embodiment further includes means of fixed search for allowing the selection of the fixed search items from the predetermined search items.

### BRIEF DESCRIPTION OF THE DRAWINGS

Fig. 1 illustrates an example of data search system according to one embodiment of the present invention;
Fig. 2 illustrates an example of a main menu screen in a data search system;
Fig. 3 illustrates an example of a basic search screen for payment data search in a data search system;
Fig. 4 illustrates a basic search screen for payment data search wherein store names are displayed in a pull-down menu;
Fig. 5 illustrates an example of a higher search item select screen of a free detailed search screen for payment data search in a data search system;
Fig. 6 illustrates a free detailed search screen for payment data search wherein code type items are displayed in a pull-down menu;
Fig. 7 illustrates a free detailed search screen for payment data search wherein numeric type items are displayed in a pull-down menu;
Fig. 8 illustrates a free detailed search screen for payment data search wherein date type items are displayed in a pull-down menu;
Fig. 9 illustrates a free detailed search screen for payment data search wherein text type items are displayed in a pull-down menu ;
Fig. 10 illustrates a free detailed search screen for payment data search wherein a higher search items are determined;
Fig. 11 illustrates an example of a lower search condition select screen of a free detailed search screen for payment data search in a data search system;
Fig. 12 illustrates a lower search condition select screen for payment data search wherein Kind of Loss/Damage Items are displayed in a pull-down menu;
Fig. 13 illustrates a lower search condition select screen for payment data search wherein major division items are displayed in a pull-down menu;
Fig. 14 illustrates a lower search condition select screen for payment data search wherein search items are selected; and
Fig. 15 illustrates an example of a search result screen of payment data search in a data search system.

### BEST MODES FOR CARRYING OUT THE INVENTION

Embodiments of the present invention will be described in detail with reference to the drawings. The present embodiment shows an example of a data search system applied to a computer system where a main server of a Casualty Insurance Company and client PCs are connected via Internet.

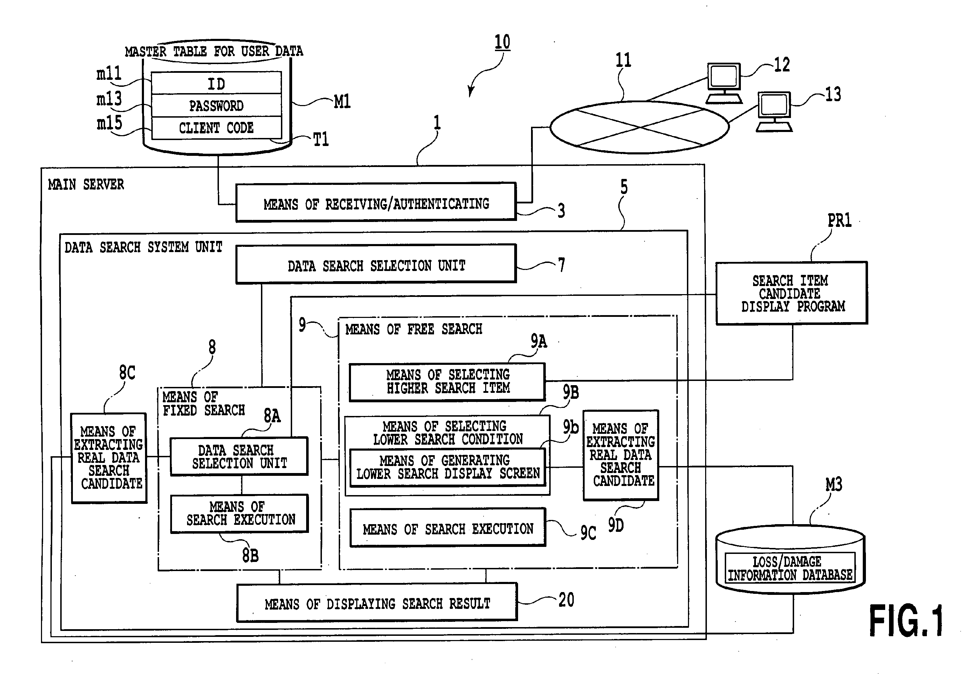

Fig. 1 shows an example of a data search system according to an embodiment of the present invention. A computer system 10 includes a Main Server 1 connected to client PCs 12 and 13 via the Internet 11. A Main Server 1 includes a Master Table for User Data M1 as a master file recording basic data, and a Loss/Damage Information Database M3 recording accident information of a real data. Here, the Master Table for User Data M1 and the Loss/Damage Information Database M3 are provided outside the Main Server 1 and connected thereto for sake of simplicity. Moreover, a Search Item Candidate Display Program PR1 composed as a part of the program is provided outside the Main Server 1 for sake of simplicity. The Master Table for User Data M1 includes a table T1 for identifying a Client Code m15 from a client ID number (ID) m11 and a Password m13 . The Loss/Damage Information Database M3 stores all of the inputted accident information items.

The Main Server 1 includes a Means for Receiving/Authenticating 3 for receiving and authenticating the ID number m11 and the Password m13 of the client inputted via the Internet 11 from the client PCs 12 and 13, and a Data Search Selection Unit 5 connected thereto.

The Data Search Selection Unit 5 includes a Data Search Selection Unit 7for selecting the data search items from the menu, a Means of Fixed Search 8, and a Means of Free Search 9 , and a Means for Displaying Search Result 20 for displaying the search result on the screen. The Means of Fixed Search 8 performs fixed search described hereinafter, and includes a Means for selecting search condition 8A and a Means of Search Execution 8B. The Means for selecting search condition 8A is connected to the Loss/Damage Information Database M3 via a Means for Extracting Real Data Search Candidate 8C.

The Means of Free Search 9 performs two-step free search described hereinafter and includes a Means for Selecting Higher Search Item 9A, a Means for Selecting Lower Search Condition 9B containing a means for generating lower search display screen 9b, and a Means of Search Execution 9C. The Means for Selecting Lower Search Condition 9B is connected to the Loss/Damage Information Database M3 via the Means for Extracting Real Data Search Candidate 9D. The data search system is composed of the Data Search Selection Unit 5 in the present embodiment.

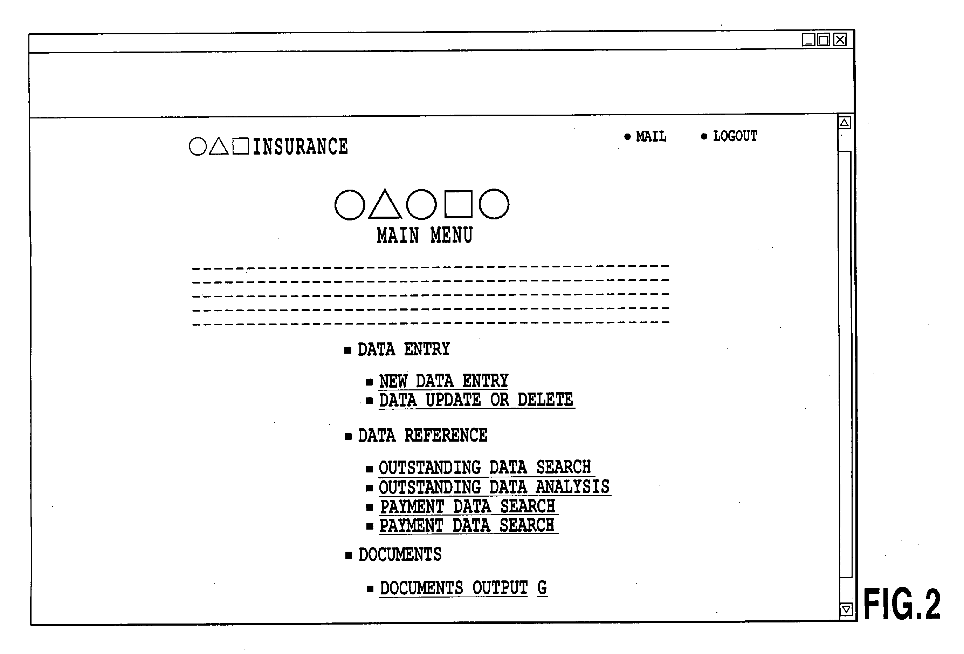

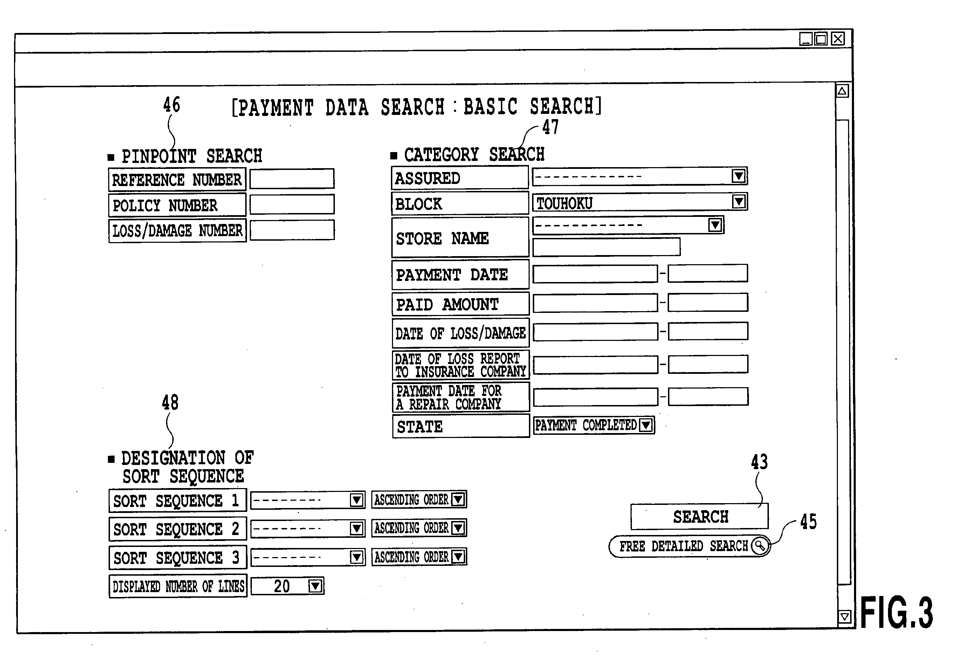

Subsequently, the operations will be described with reference to the examples of the display screen. The Means for Receiving/Authenticating 3 authenticate the users of the client PCs 12 and 13 by searching the Master Table for User Data M1 based on the inputted ID number m11 and the Password m13 to obtain the corresponding Client Code m15. When the authentication is completed, the main menu screen shown in Fig. 2 is displayed on the client PCs 12 and 13 via the Data Search Selection Unit 7. The user selects one item from data entry, data reference, and documents. Here, the payment data search, which is one of the search functions, is selected. Next, the basic search screen shown in Fig. 3 is displayed on the client PCs 12 and 13 via the Means for selecting search condition 8A of the Means of Fixed Search 8.

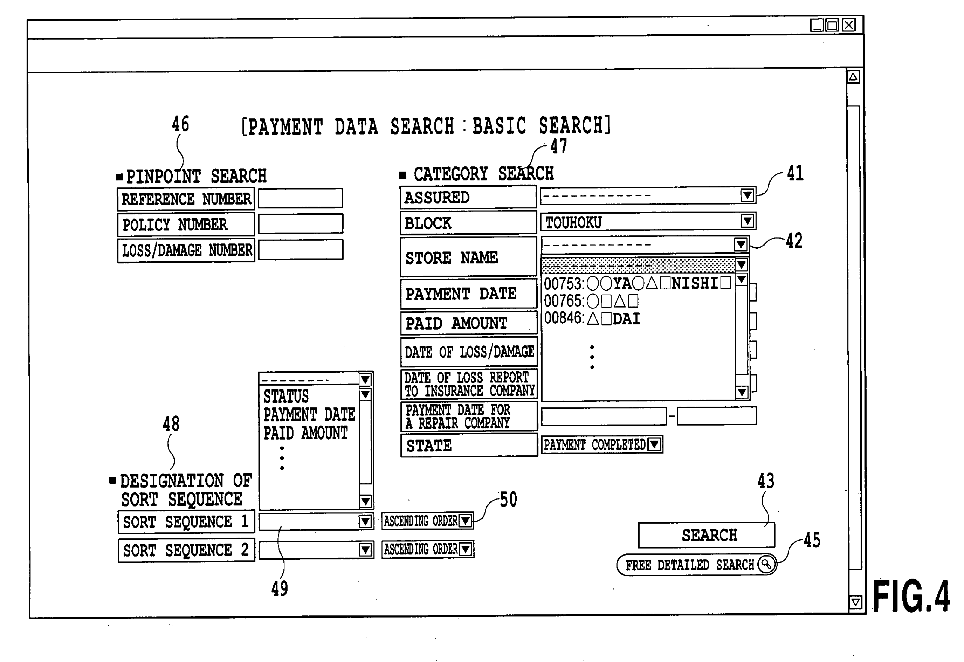

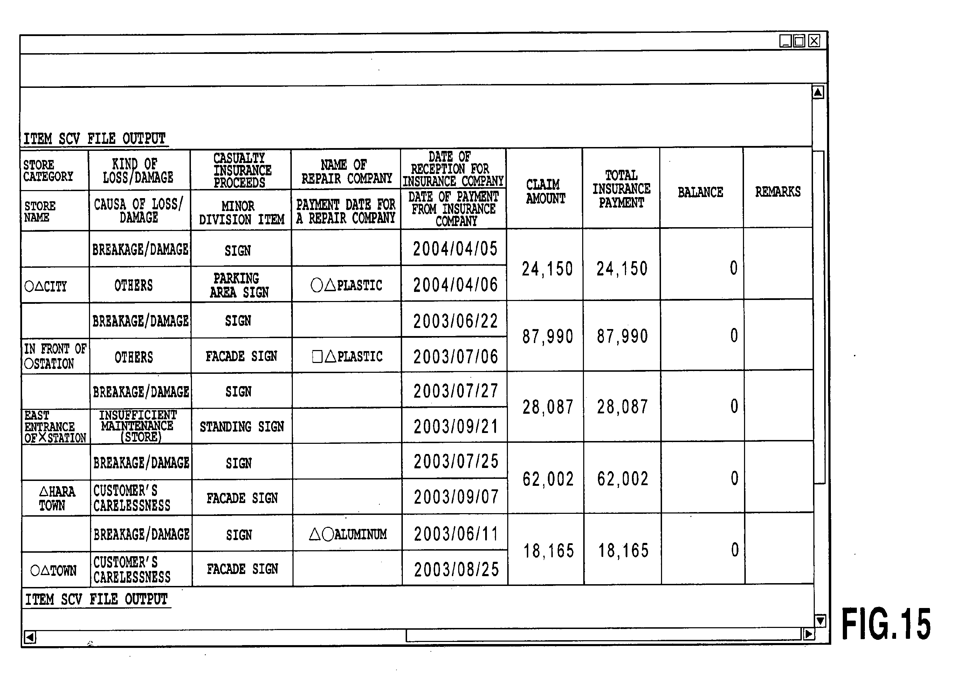

When performing fixed search, the user selects the predetermined fixed search items from the basic search screen shown in Fig. 3. This screen displays a column 46 for pinpoint search items, a column 47 for category search items, and a column 48 for sort sequence designated items. As shown in Fig. 4, the candidates for the search items extracted from the stored data are displayed on the item where a Pull-down Sign 41 is provided at the end of the dialog box, via the Means for Extracting Real Data Search Candidate 8C, from the Loss/Damage Information Database M3. The Means for Extracting Real Data Search Candidate 8C dynamically edit the candidates collected from the data stored in the Loss/Damage Information Database M3 constantly from the latest data with instruction of the basic search screen generation provided as a trigger. In Fig. 4, the candidates for a store name dialog box 42 are displayed in a pull-down menu. The user designates certain necessary items and clicks a search button 43 to execute the search. The Means of Fixed Search 8 obtains corresponding data from the Loss/Damage Information Database M3 in accordance with the selected search items and displays the search result such as that shown in Fig. 15.

Referring to Fig. 4, the user can designate the sort sequence of the data up to third using a column 48 for sort sequence when displaying a list of the "search result" . Fig. 4 shows candidate items for a dialog box 49 corresponding to Sort Sequence 1 of the column 48 for sort sequence designated items being displayed in a pull-down menu. Thus the user can select reference items for major arrangement and their ascending /descending order can be designated with an ascending/descending order dialog box 50.

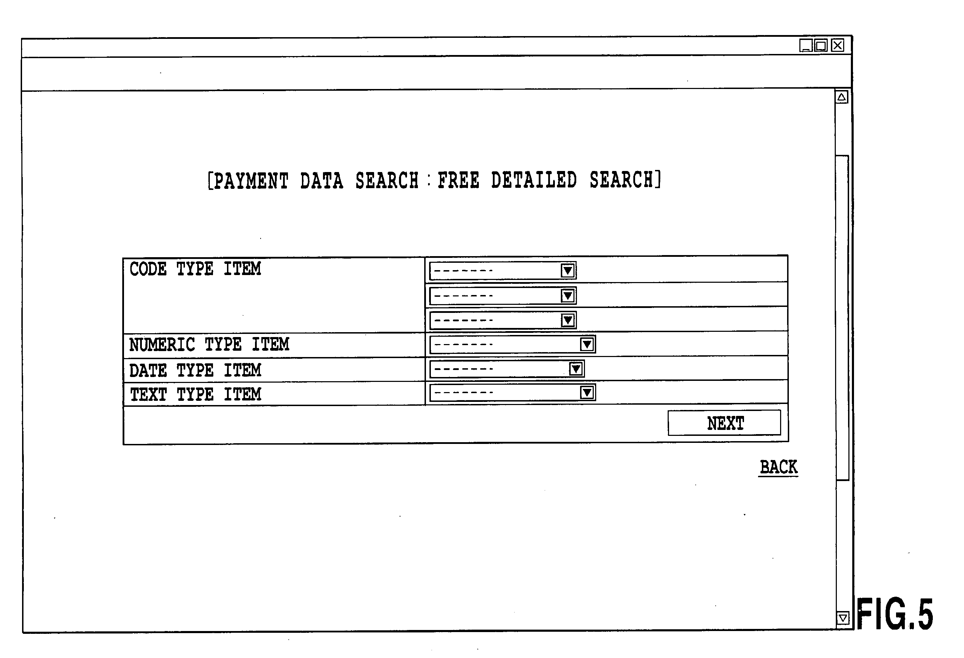

However, the fixed search using the Means of Fixed Search 8 can search only the previously fixed displayed items. Consequently, the user clicks a button 45 of "Free Detailed Search" on the screen shown in Fig. 3 or Fig. 4 when performing a free search. A free detailed search screen shown in Fig. 5 is displayed on the client PCs 12 and 13. Fig. 5 shows an example of a higher search item select screen from the free detailed search screen. On the free detailed search screen, higher search items can be selected from respective four search items according to data attributes, i.e., "Code Type Item" (item classified and identified by codes), "Numeric Type Item" (item identified by numbers), "Date Type Item"(item identified by date), and "Text Type Item"(item identified by text).

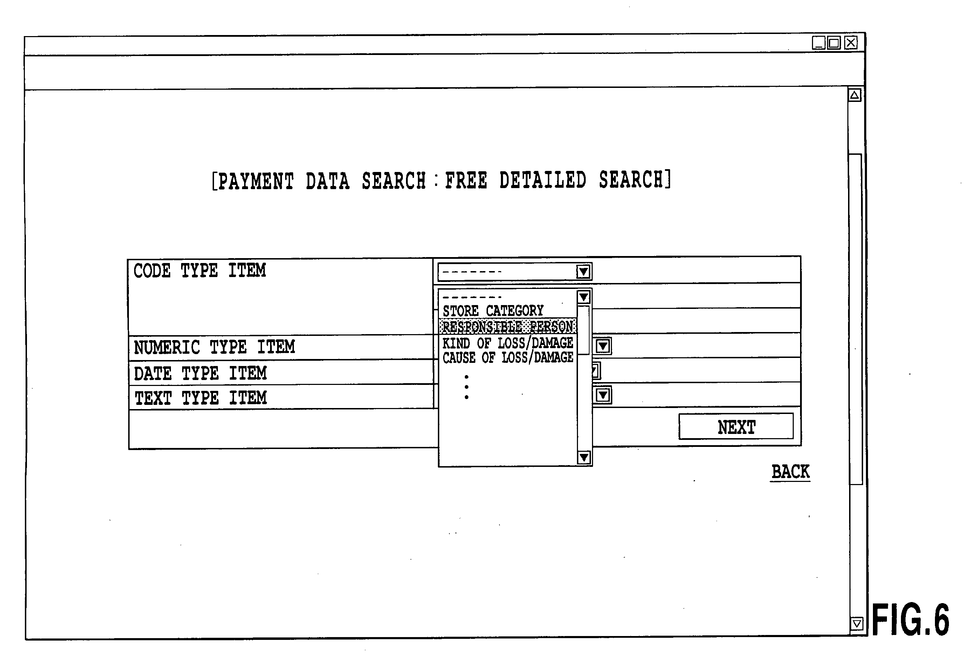

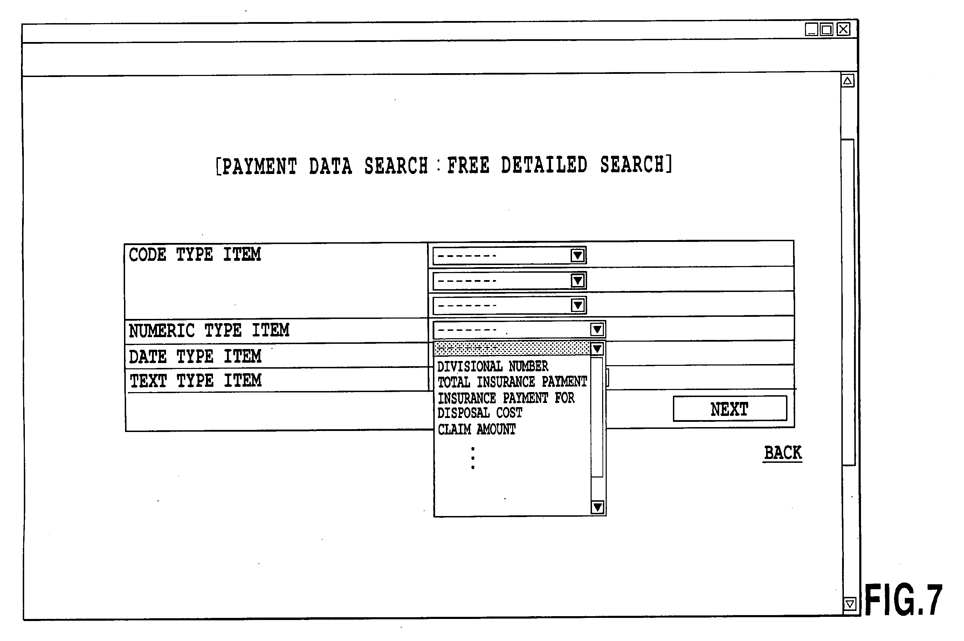

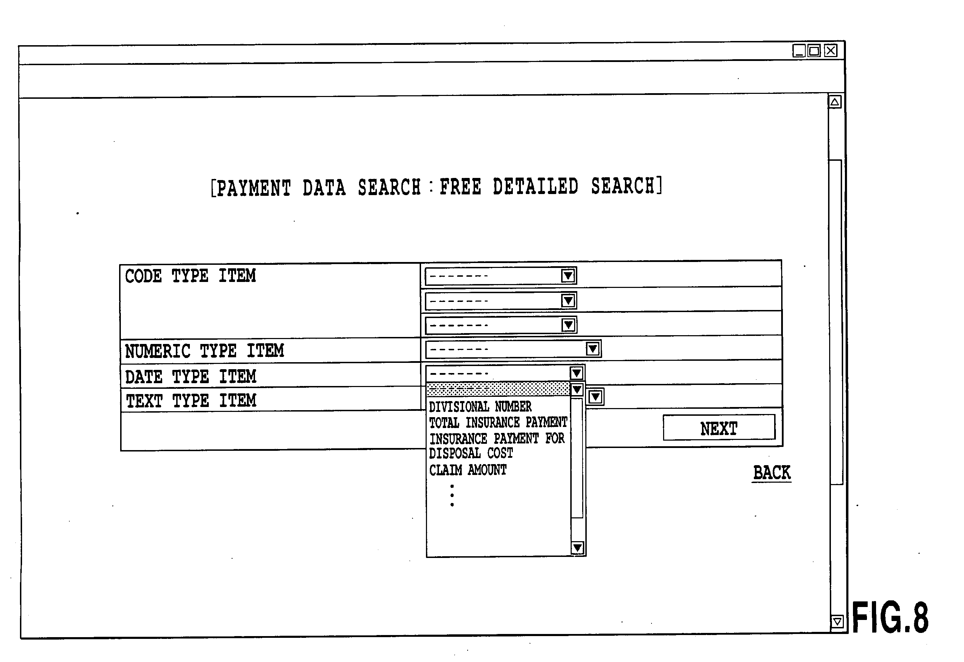

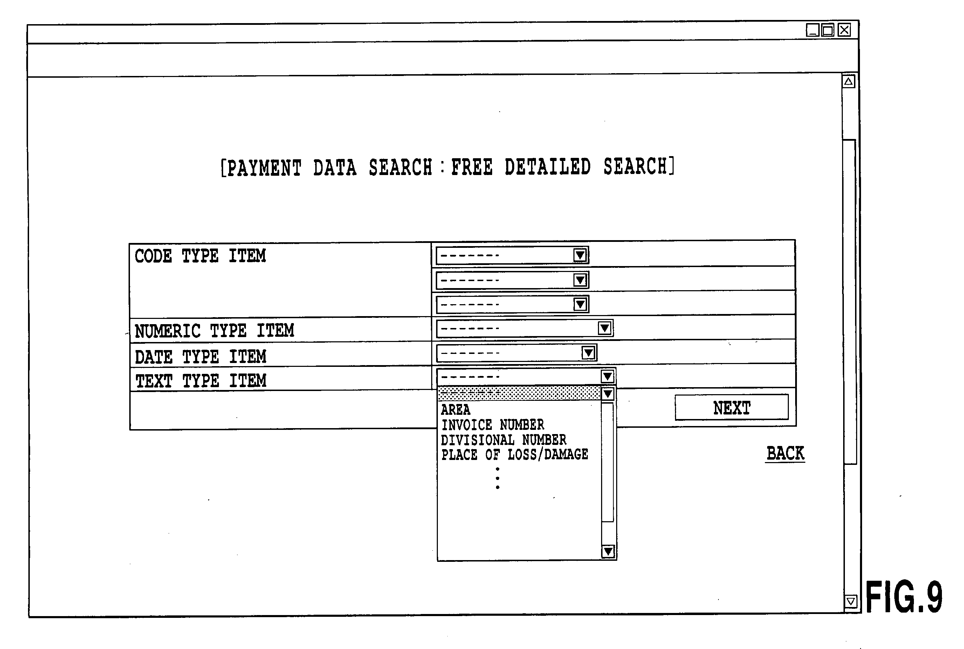

The free detailed search screen shown in Fig. 6 is part of the "Code Type Items" and the candidates of the higher search items are displayed in a pull-down menu from the dialog box. The free detailed search screen shown in Fig. 7 is part of the "Numeric Type Items" and the candidates of the higher search items are displayed in a pull-down menu from the dialog box. The free detailed search screen shown in Fig. 8 is part of the "Date Type Item" and the candidates of the higher search items are displayed in a pull-down menu from the dialog box. The free detailed search screen shown in Fig. 9 is part of the "Text Type Item" and the candidates of the higher search items are displayed in a pull-down menu from the dialog box. The candidates of the higher search items in Fig. 6 to Fig. 9 are predetermined by the program and displayed in a pull-down menu.

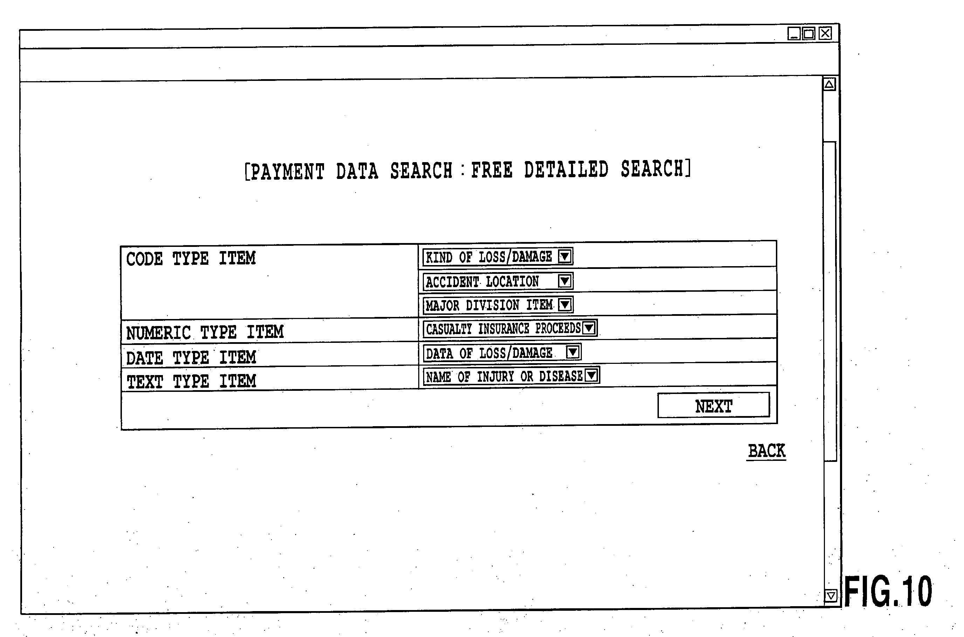

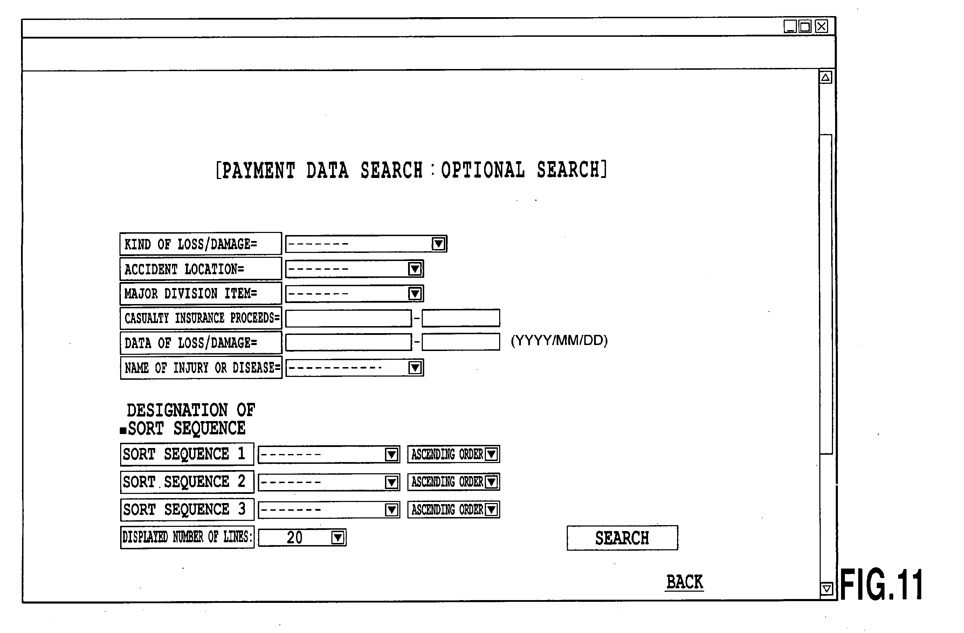

Subsequently, screen generation/display for lower search condition will be described. Fig. 10 shows the state that their keyword used for search are selected for higher search items respectively. "Kind of Loss/Damage", "Accident Location", and "Major Division Item" are selected respectively for the "Code Type Items", "Casualty Insurance Proceeds" is selected for the "Numeric Type Item", "Date of Loss/Damage" is selected for the "Date Type Item", and "Name of Injury or Disease" is selected for "Text Type Item". By clicking "Next" button in the bottom-right corner of the screen of Fig. 10 in this state, the Means for Generating Lower Search Display Screen 9b included in the Means for Selecting Lower Search Condition 9B displays the lower search condition select screen shown in Fig. 11. For example, the "Numeric Type Item" displayed in the screen of Fig. 10 is not displayed, but displayed to allow the input of lower search condition included in the "Casualty Insurance Proceeds" which is the selected higher search item.

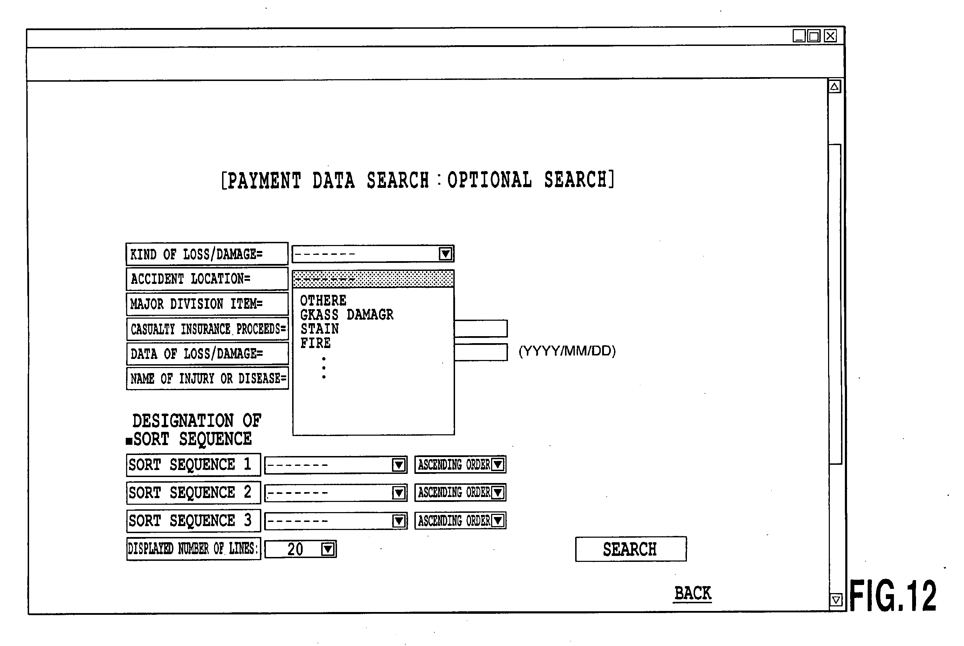

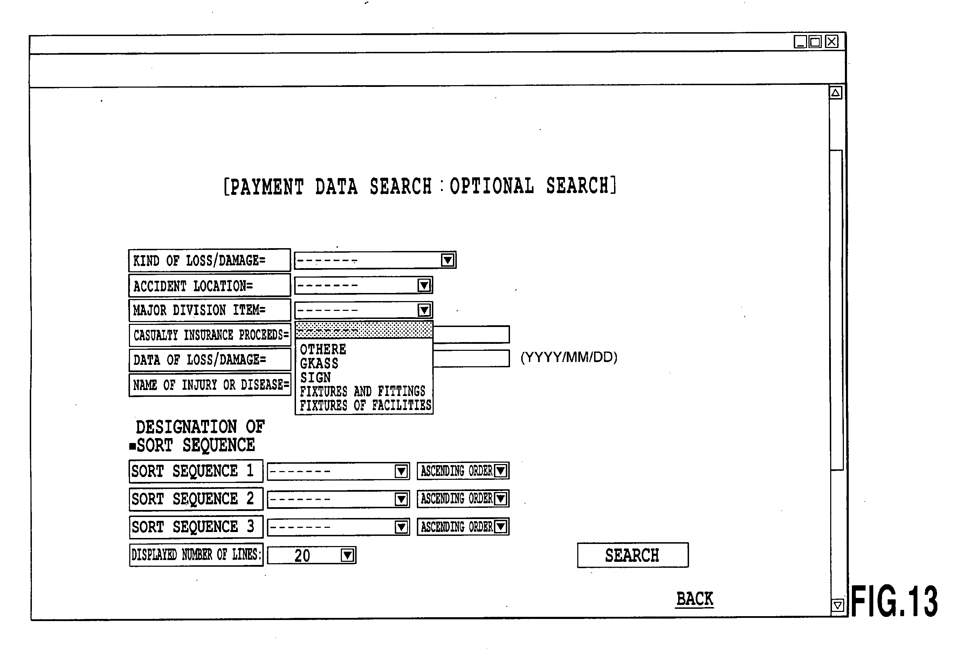

Consequently, the selection of the lower search condition will be described. Fig. 12 shows the lower search condition select screen of Fig. 11 wherein the candidates of the lower search condition for the "Kind of Loss/Damage" dialog box being opened and displayed in a pull-down menu. Fig. 13 shows the lower search condition select screen of Fig. 11 wherein the candidates of the lower search condition for the "Major Division Item" dialog box being opened and displayed in a pull-down menu.

These candidates of lower search condition are extracted from the stored data and displayed via the Means for Extracting Real Data Search Candidate 9D from the Loss/Damage Information Database M3. The Means for Extracting Real Data Search Candidate 9D dynamically edit the candidates collected from the data stored in the Loss/Damage Information Database M3 constantly from the latest data with instruction of the lower search display screen generation provided as a trigger. Therefore, the search based on the selected lower search condition allows one to obtain hit data from the Loss/Damage Information Database M3 without failure.

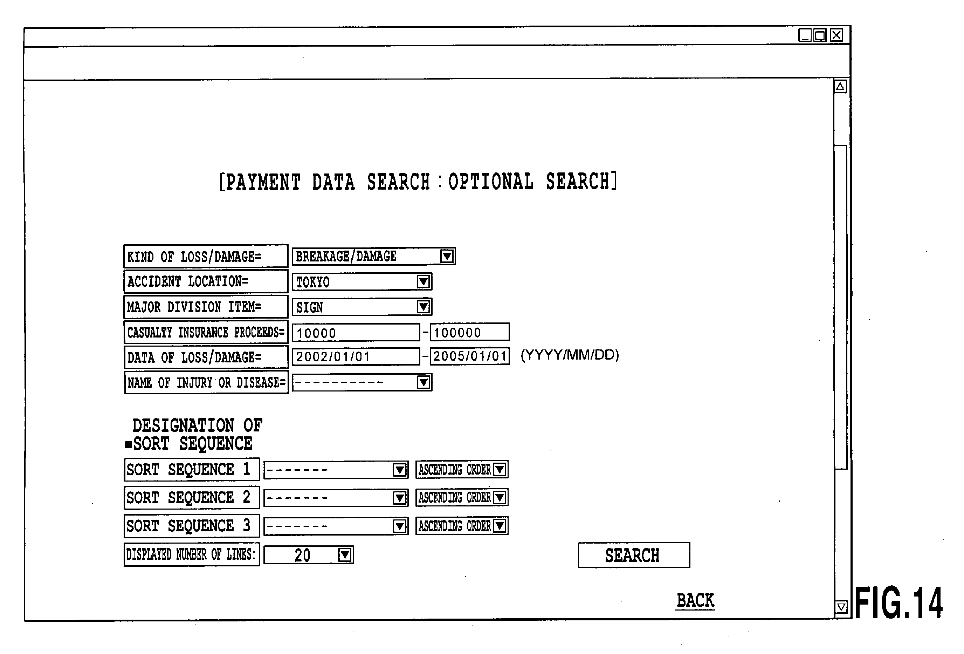

Fig. 14 shows the state of the search items being inputted by the user on the lower search condition select screen shown in Fig. 12 and 13. The user clicks the bottom-right "Search" button on the screen shown in Fig. 14 to execute the search. The Means of Free Search 9 obtains the corresponding data from the Loss/Damage Information Database M3 in accordance with the designated search items and displays the search result such as that shown in Fig. 15. The search result screen shown in Fig. 15 is displayed on the client PCs 12 and 13 by the Means for Displaying Search Result 20.

Although the two-step free search which enabled the selection of the lower search condition for the respective higher search items is described in the present embodiment, it is to be understood that free search of three-step or more step can be executed by allowing to set the further lower search condition. That is, the Means of Free Search 9 may be composed of the Means for Selecting Higher Search Item 9A and a plurality of the Means for Selecting Lower Search Condition 9B.

As mentioned above, data search system, method and program increase the degree of freedom for search and facilitate the search even in the case of a number of massive data items so that it can be applied when executing data search to make the extraction of data more reliable.

## Claims

1. A data search system for retrieving the data stored in the database, comprising:
means for selecting higher search item for allowing the selection of the higher search items, and
means for selecting lower search condition for allowing the selection of the lower search condition for the respective selected higher search items.

2. The data search system according to claim 1, wherein the display screen in the means for selecting higher search item displays the higher search items in a pull-down menu, and the display screen in the means for selecting lower search condition displays the lower search condition corresponding to the selected higher search items in a pull-down menu.

3. The data search system according to claim 1 or 2 further comprising means for extracting real data search candidate for extracting the lower search condition from the data stored in the database.

4. The data search system according to claim 1, 2, or 3 further comprising a plurality of means for selecting lower search condition for allowing the selection of the lower search condition for the respective selected lower search items.

5. The data search system according to any one of claim 1 to 5 further comprising means of fixed search for allowing the selection of the fixed search items from the predetermined search items.

6. The data search system according to claim 5 further comprising means for extracting real data search candidate for extracting the fixed search items from the data stored in the database.

7. A data search method for retrieving the data stored in the database comprising the steps of:
allowing the selection of the higher search items; and
allowing the selection of the lower search items for the respective selected higher search items.

8. A data search program being executed by a computer for searching a data stored in a database, comprising the steps of:
selecting the higher search item for allowing the selection of the higher search items; and
selecting the lower search condition for allowing the selection of the lower search condition for the respective selected higher search items.
